# EUROPEAN PATENT SPECIFICATION

(11) **EP 4 302 583 B1**
(45) Date of publication and mention of the grant of the patent: **16.07.2025**
(21) Application number: 23180098.8
(22) Date of filing: 19.06.2023
(51) Int. Cl.: A01B 39/18, A01M 21/02, A01B 49/02, A01B 33/10

(54) **AGRICULTURAL EQUIPMENT**
LANDWIRTSCHAFTLICHE AUSRÜSTUNG
ÉQUIPEMENT AGRICOLE

(30) Priority: 06.07.2022 NO 20220771
(43) Date of publication of application: 10.01.2024
(73) Proprietor: Borgtek AS, 3074 Sande i Vestfold (NO)
(72) Inventor: Borgen, Lars, 3074 Sande i Vestfold (NO)
(74) Representative: Håmsø Patentbyrå AS

(56) References cited:
- EP-B1- 0 216 922
- BE-A7- 1 003 174
- JP-A- S 537 421
- SU-A1- 912 086

## Description

### FIELD

The present invention relates to weed control in agriculture. More specifically, the present invention relates to an improved tillage machine for controlling weeds or terminating cover crops.

### BACKGROUND

In cereal farming, multi-year weeds need to be controlled. Weeds can be a serious problem as they consume space and energy from the intentionally grown crops. Excessive weeds will reduce the crop yield, thereby affecting profitability of the farm. Perennial weeds are flowering weeds that can produce by both seeds and by the spread of energy-storing vegetative parts, such as the roots or tubers. This means that even a small root can reproduce an entire plant. Elymus repens, often called quack grass, is a perennial weed which frequently causes problems as it is able to spread both through roots stems and seeds, making it a persistent weed. Furthermore, elymus repens survive throughout the winter months, therefore it can cause significant problems for farmers if it is not controlled.

Elymus repens is in the same plant family as most cereals, therefore it is hard to control during the cereal growing season with herbicides. Chemical herbicides are often used outside of cereal growth season, most typically chemical herbicides comprising glyphosate. It is common to use chemical herbicides in the spring or after the harvest. If used in spring, the chemicals are normally delivered to the field before seeding or directly after seeding but before the cereal plants have developed leaves. When used post-harvest, glyphosate is applied when the weed is in good growth with high plant circulation, thereby ensuring the whole plant including the roots dies properly.

In organic farming, glyphosate is not used. It is desirable to reduce the use of glyphosate in conventional farming. However, farmers often resort to using glyphosate as they also want to minimise soil disturbance and to reduce energy consumption, for example energy consumed in the form of fossil fuels to power the tractor pulling the tillage equipment through the soil. Stricter regulation on the use of glyphosate in agriculture is being discussed in many countries, therefore it is highly desirable to find sustainable and cost-effective alternatives to using glyphosate, particularly in cereal agriculture.

Alternatively, or in addition to using chemical herbicides, tillage is often used to reduce the pressure on crops created by weeds. Tillage is the manipulation or preparation of soil by mechanical agitation in various forms. For example, tillage generally covers digging, stirring, overturning or other mixing of the soil to prepare the soil for use in agriculture. Historically, manual hand tools including shovels, hoes, rakes etc. were used to prepare the soil for agriculture. As technology has advanced, tillage machines are now much larger and are typically pulled by a vehicle, most typically a tractor. Tillage may be performed before and after the cereal growth to kill and/or disturb the plants and thereby control weed populations.

It is known that cutting the roots of the Elymus Repens with tillage quickly after harvest is an effective way to reduce the Elymus Repens ability to store energy in the roots.

Tillage with inversion ploughing can bury the weeds deep into the soil and thereby increase the amount of time for the weeds to reach back to the surface and develop new green leaves. In this technique, the roots are not fully killed, and are instead only set back. Therefore, over many years other methods of controlling these weeds may be required. Furthermore, inversion ploughing moves a significant amount of soil, therefore the process is energy intensive and time consuming.

Tillage using chisel plows, cultivators, spring harrows and disc harrows may be used to combat weeds such as elymus repens. Similarly to inversion ploughing, use of chisel plows, cultivators, spring harrows and disc harrows is energy intensive and time consuming. Energy and time inputs can significantly affect the economics of running a cereal farm.

Shares refers to the part of the tillage equipment which penetrates and interacts with the soil to disturb it. Cultivators stir and pulverise the soil. Harrows disturb the surface of the soil. Cultivators or harrows with shares similar to a duck foot or a wing shape need a certain cultivating depth to avoid build-up of organic matter on the shares and also to avoid pushing the straw/stubble/soil instead of cutting or disturbing it. Operating cultivators or harrows at shallow depths when there are large amounts of straw and stubble from the harvest is problematic. Often, the cultivators or harrows become blocked as straw and stubble builds-up on the cutting edge or on the tines. Cultivators and harrows are normally made with the tines separated on multiple rows with large inline separation to avoid blocking and ensure material flow through the machine. They are therefore often long, heavy and expensive

Increasing cultivating depth has significant drawbacks. Firstly, more pulling power is required to pull the shares through deeper soil. The process therefore consumes more energy when the shares are located deeper in the soil. The process is also more time consuming per worked area when compared with shallower tillage. In terms of weed killing performance, deep tillage using cultivators with duck foot or wing shaped shares can result in an upper part of the weed having enough roots with soil contact to survive and re-establish growth faster. If rain falls after cultivating, there is an increased risk that the weeds will re-establish because the roots are mixed in the top soil.

Disc cultivators, also called disc harrows, penetrate into the soil and can move the soil horizontally if set at an appropriate angle. The disc cultivators cut the weed roots by the downward cut of discs into the soil and by the horizontal travel of the edge due to disc angle. There are some limitations of using disc cultivators for managing weed populations. Firstly, to ensure a full cut of the roots the tillage depth needs to be relatively deep, or the machine will need dense discs to achieve full cutting. In both cases there will be a high draft requirement and high energy consumption. Secondly, using a disc cultivator will result in the mixing of the cut roots with soil, burying some of the roots which may lead to re-establishment of the weed, especially after rain.

Rotary harrows are typically connected to the tractor or vehicle pulling the rotary harrow in a manner such that power can be taken from the vehicle to drive the rotary harrow. This arrangement is referred to in the industry as power take off (PTO). Rotary harrows provide an intensive mixing of the top soil and also cut the weeds into smaller pieces. Although this method has a good effect on the control of weeds, there are significant drawbacks in terms of energy consumption and the intense disturbance of soil-life.

Special machines have been developed to try to address the problems with commercially available equipment for controlling weed populations. For example, a cultivator with a following rotary harrow has been developed, but still has the drawback of high energy consumption and low capacity. Some equipment is designed to lift the roots up in the air and leave the roots on the top of the soil. This method is most suitable for niche applications, because although the result is promising and effective, the energy consumption is high and there is still an issue of low capacity.

The more the soil is disturbed, the greater the impact on microbiological life in the soil and the greater the risk of erosion of the soil which may impact the ability to grow crops.

There is therefore a need for a machine for combatting weeds, particularly in cereal fields, which is energy efficient, which does not have a great impact on microbiological life in the soil, and which can operate when there are significant plant residues present in the soil.

There is also a need for a machine for terminating cover crops. Cover crops are plants that are used primarily to slow erosion and improve soil quality. Additionally, cover crops can improve water availability, supress weeds, improve biodiversity and control pests. When it is desired to use the soil for other crops, the cover crops must be terminated. There is therefore a need for a machine which can terminate the cover crops with the same benefits as described above for weeds.

US patent document US2014338932 discloses an agricultural undercut implement including a frame carrying ground-engaging rolling means, a cutting disk arrangement to cut parallel slits in the ground soil, and an undercut assembly having upright cutting edges each aligned to follow a slit, and a transverse blade with a horizontal cutting edge disposed to undercut the ground soil between slits, as the frame rolls over the ground, such as when towed behind a tractor. The transverse blade is configured to sever the strip of ground soil undercut by the cutting edge, and then move the undercut soil strip up and over the blade before replacing it intact on the ground.

Belgian patent document BE1003174 discloses a verge cutting device designed to be installed on a tractor to cut a road verge. The device is provided with a rotary cutting disk to cut the grass on the road verge, and a scraper blade behind the cutting disk to remove the cut grass from the road verge. There is a rotary shaft above the scraper blade fitted with a series of radial arms to deviate the cut grass from the scraper blade to the transporters that remove the cut grass from the road verge. The arms are telescopic which avoids damage to the outside ends of the arms and/or blockage of the shaft if grass or stones are trapped between the arm and the scraper blade.

Japanese patent document JPS6181705A discloses a work method for loosening the ground of arable land by means of loosening coulters which are rigid or which are moved on curved tracks. The loosening of the ground and the tilling of the uppermost soil layer are carried out either in one operation by coulters arranged in two rows and staggered in the direction of travel and by the tines of the cutters or in that, in a first operation, individual field strips are preloosened only with the coulters arranged at wide lateral distances from one another on the frame. Thereafter, the ground thus loosened and tilled on its surface is levelled and recompacted by a third working implement which is coupled to the two working implements and which has a packer roller or tilling roller.

United States patent document US2952322A relates to plows which till subsurface soil only, leaving the topsoil and stubble substantially intact, with the stubble and trash adequately anchored. The plows are especially useful in dry land farming, in which sub-soil is effectively cultivated with a minimum of surface tilling whereby a major portion of the surface turf is maintained substantially intact.

United States patent document US2019307115 discloses a combination cutting blade/raking device where the blade portion slices weeds off under the soil, thereby effectively killing the plant, and a raking portion collects the uprooted weeds. The blade and rake also flatten the surface of the soil. The raking section of the invention can be lifted independently of the cutting blade. The cutting blade is reversible so a user of the invention can cut twice as much area before having to remove the blade for sharpening. The blade is slightly curved in cross section, allowing for a smoother cutting path through the soil.

United States patent document US1724143A relates to an agricultural implement for weeding or otherwise cultivating rolling, rough and uneven ground.

United States patent document US3022836A relates to a root plow. United States patent document US1597234A relates to a weed extractor. United States patent document US2547400A relates to a tap root cutter. United States patent document US1647680A relates to a weeding machine.

Patent document EP0216922B1 discloses a machine wherein in the direction of movement of the machine there is an initial row of cutting wheels arranged diagonally to the direction of movement with an essentially horizontal axis, in front of which there is arranged a cylindrical roller, with the help of which weeds and other remnants of a previous harvest such as stalks, stubble and the like can be crushed. Following this is another row of tearing out implements with knives, which preferably run with the points in advance sharpened, which serve to tear out and to loosen up the soil without replowing the latter in the process. This is connected with plowshare blades which carry out a partial replowing of the loosened soil. An additional diagonal row of rotating implements with an essentially horizontal axis fulfills the function of a harrow and serves to effect final plowing and to break up the soil in small pieces. The cutting wheels and the rotary implements have their axis inclined orthogonally to the direction of movement of the machine whereas the tearing out implements are laid out in the direction of movement.

Patent document SU912086A1 discloses a combination type soil tilling unit and root crushing device thereof.

Patent document BE1003174 discloses a verge cutting device designed to be installed on a tractor to cut a road verge. The device is provided with a rotary cutting disk to cut the grass on the road verge, and a scraper blade behind the cutting disk to remove the cut grass from the road verge. There is a rotary shaft above the scraper blade fitted with a series of radial arms to deviate the cut grass from the scraper blade to the transporters that remove the cut grass from the road verge. The arms are telescopic which avoids damage to the outside ends of the arms and/or blockage of the shaft if grass or stones are trapped between the arm and the scraper blade. The invention has for its object to remedy or to reduce at least one of the drawbacks of the prior art, or at least provide a useful alternative to prior art.

The object is achieved through features, which are specified in the description below and in the claims that follow.

### SUMMARY

According to a first aspect of the invention, there is provided a tillage machine for cutting roots of plants or weeds, comprising: at least one share comprising a cutting edge for cutting roots; and at least one guiding means comprising a rotor and at least one soil engaging protrusion; wherein the cutting edge is arranged parallel with the axis of rotation of the rotor; the share is configured to be located in soil in use, and the tillage machine is configured such that the at least one guiding means is located above the at least one share in use, such that in use the guiding means guides soil and plant material over the share such that the share does not become blocked characterised in that the rotor is located vertically above the cutting edge; and the rotor is configured to allow the soil engaging protrusion to rotate and wherein the soil engaging protrusion is configured to rotate in use and engage the soil and plant material and guide the soil and plant material over the share in use.

The tillage machine may further comprise a shank configured to hold the share in a substantially horizonal position in use.

The rotor may be an elongate shaft. The at least one soil engaging protrusion may be a tine.

The at least one tine may have a proximal end and a distal end. The proximal end may be connected to the rotor with a biassing means configured to bias the tine radially outward of the rotor.

The biassing means may be configured to allow movement of the tine when a sufficient force is applied to the tine.

The at least one tine may have a proximal end and a distal end. The proximal end may be connected to the rotor and the tine may comprise a spring feature configured to allow movement of the distal end when a sufficient force is applied to the distal end.

The at least one tine may comprise a longitudinal axis, wherein the spring feature is a bend in the longitudinal axis of the at least one tine.

The at least one soil engaging protrusion may comprise a plurality of soil engaging protrusions.

Each of the plurality of soil engaging protrusions may be a tine connected to the rotor at a proximal end with a biassing means configured to bias the tine radially outward of the rotor and to allow movement of the tine when a sufficient force is applied to the tine.

The tillage machine may further comprise a main frame, an adjustable subframe and at least one wheel, wherein the main frame is for connecting the tillage machine to a vehicle in use; the adjustable subframe is connected to the main frame and to the at least one wheel; and the at least one wheel is configured to travel across the surface of the soil in use and support at least some of the weight of the tillage machine in use; wherein the adjustable subframe is configured to allow adjustment of the working depth of the at least one share in use by raising or lowering the wheel with respect to the share.

The adjustable subframe may be configured to raise or lower the wheel with respect to the share by means of an adjustable connection between the main frame and the at least one wheel.

The adjustable connection may be a hydraulic cylinder.

The subframe may comprise a telescopic leg and the adjustable connection may comprise a manually adjustable knob for telescoping the telescopic leg.

According to a second aspect of the invention, there is provided a tillage system for cutting plants or weeds, the system comprising: a tractor; and a tillage machine according to the first aspect of the invention; wherein the tillage machine is connected to the tractor such that the tillage machine can be pulled by the tractor in use to cut plants or weeds in soil.

According to a third aspect of the invention, there is provided a method of cutting roots of plants or weeds in a strip of soil, the method comprising the steps of: providing a tillage machine according to the first aspect of the invention; locating the share within the soil; locating the guiding means above the soil surface such that it can guide soil over the share in use; and advancing the tillage machine through the soil to cut the roots of plants or weeds in the soil.

The suitability of the invention for shallow operations ensures that the cut weeds will have a high ratio of leaves over roots, ensuring that the top part of the plant die as there is a high likelihood the leaves will dry out. The disconnected roots will need to use a lot of their energy to grow back to the soil surface. Additionally, using the invention, all the root stems may be cut over the complete working width. The invention has a very low energy consumption, therefore providing a high capacity at a low cost. Additionally, the low energy consumption enables a higher forward speed or a larger working width for the same tractor size. Use of the tillage machine can be combined with inversion ploughing because the tillage machine does not affect the deeper layers of the soil when it is used. Furthermore, the tillage machine is suitable for use in organic farming, conversation agriculture or conventional agriculture. The tillage machine may allow for the reduction or elimination of the use of Glyphosate with limited increase in energy consumption for weed control. The tillage machine causes minimal soil disturbance.

### BRIEF DESCRIPTION OF THE DRAWINGS

An embodiment of the invention will now be described with reference to the following drawings, in which:
Figure 1a shows a series of plants comprising roots within soil;
Figure 1b shows a cutting plane within the soil shown in Figure 1a;
Figure 1c shows the plants of Figure 1a cut at the cutting plane;
Figure 1d shows a principal sketch of a tillage machine;
Figure 2 shows a first example of a tillage machine;
Figure 3 shows the tillage machine of Figure 2 in use;
Figure 4 shows a second example of a tillage machine;
Figure 5 shows an alternative view of the tillage machine shown in Figure 4;
Figure 6 shows an example of a foldable tillage machine in an open configuration; and
Figure 7 shows the foldable tillage machine of Figure 6 in a folded configuration;
Figure 8 shows a detailed view of a portion of the foldable tillage machine shown in Figure 6;
Figure 9 shows a side view of the foldable tillage machine shown in Figure 6;
Figure 10 shows an alternative tine;
Figure 11 shows the path of travel of the alternative tine when connected to a rotor; and
Figure 12 shows a plurality of alternative tines connected to a rotor.

For clarity reasons, some elements may in some of the figures be without reference numerals. A person skilled in the art will understand that the figures are just principal drawings. The relative proportions of individual elements may also be distorted.

### DETAILED DESCRIPTION OF THE DRAWINGS

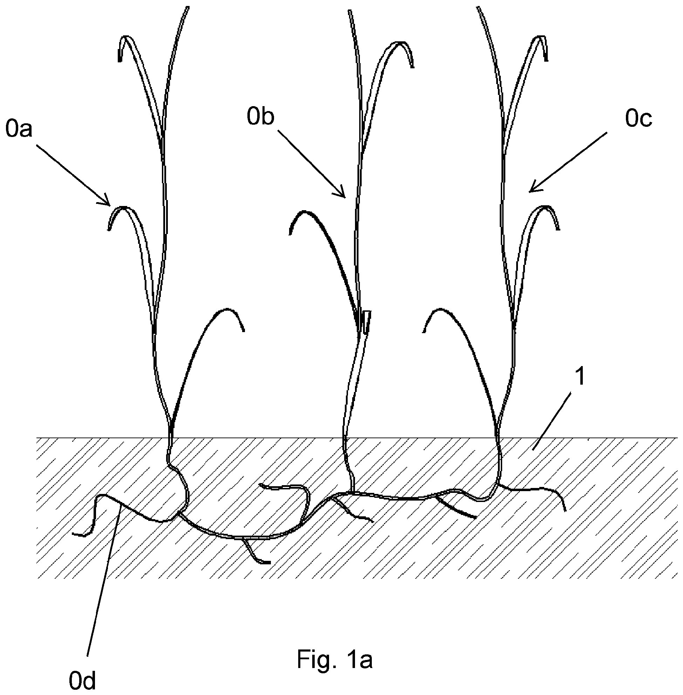

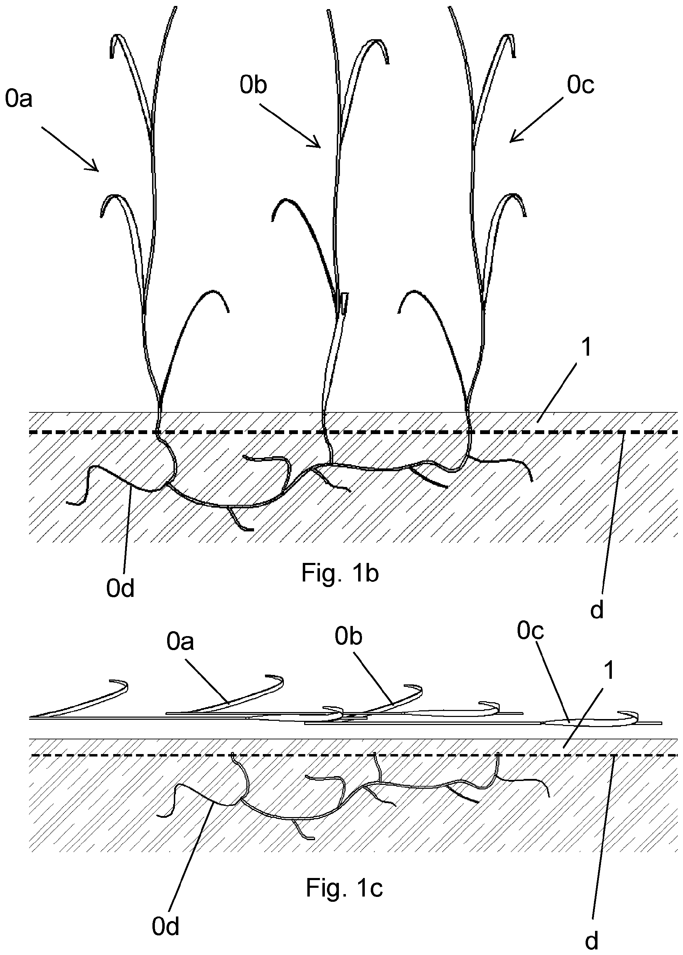

Figure 1a shows a series of plants 0a, 0b, 0c comprising roots 0d within soil 1. To kill or set back the plants 0a, 0b, 0c, a cut is made through the soil 1 along a cutting plane at a shallow depth d, as can be seen in Figure 1b. It is desirable to cut the roots 0d at a shallow depth as this leaves minimal soil on the portion of the roots 0d still attached to the plants 0a, 0b, 0c. A large amount of soil attached to a large portion of the roots 0d after cutting may lead to the plants 0a, 0b, 0c regrowing, particularly if there is rainfall after the cutting.

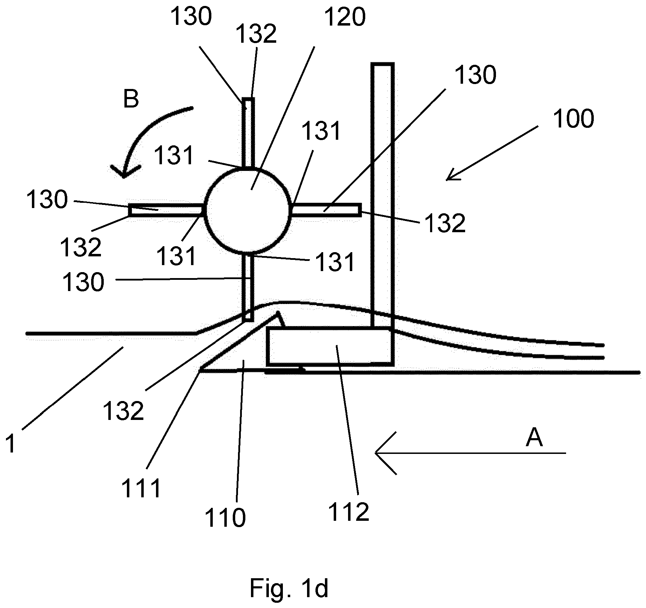

Figure 1d shows a principal sketch of a bed of soil 1 and a tillage machine 100. The tillage machine 100 comprises a substantially horizontal share 110 for engagement and agitation of the soil 1. The share 110 is arranged to cut the top layer of the soil 1 and thereby cut the roots of weeds under the top of the soil 1. To ensure the share 110 does not become clogged with plant residues, a rotor 120 is provided over the share 110. The rotor 120 is preferably located directly above the share 110. However, in some alternative examples, the rotor 120 may be forward or rear of directly above the share 110. The rotor 120 is arranged with tines 130 to guide the soil 1, organic matter and/or plant residues as they pass over the share 110. In use, the rotor 110 rotates in the driving direction of the machine 100. That is to say, in the example shown in Figure 1d, the machine 100 moves in the direction A and the rotor 120 rotates in the direction B. The tines 130 in the presently described example are steel bars each connected to the rotor 120 at a proximal end 131 with a spring (not shown), such that each tine 130 can move with respect to the rotor 120 to pass over rocks or other obstructions in the soil. Each tine 130 has a distal end 132 which may engage the soil 1. The tines 130 are configured such that they do not penetrate deeply into the soil 1. Preferably, the tines 130 are arranged to not contact the soil 1 in normal use, except when a quantity of soil 1 or plant material builds up on the share 110. It will be understood however that the user of the machine may lower the share 110 into the soil 1 to allow a deeper depth of cut. In such a case, the tines 130 may penetrate into the soil 1 slightly in normal use. However, the purpose of the tines 130 is not to penetrate and agitate the soil 1 to provide mixing of the soil 1. Instead, the tines 130 are for guiding excess soil 1 and plant material over the shares 110 to avoid blockage or clogging at the shares 110. Preferably, the rotor 120 is arranged to rotate with a speed such that the distal ends 132 pass over or slightly engage the soil 1 at a speed equal to the speed at which the machine 100 is progressed forwards in the direction A. In some other examples, the rotor 120 and tines 130 may be configured such that the distal ends 132 pass over or engage the soil 1 at a speed greater than the speed the machine 100 is progressed forwards in the direction A. In this connection, the speed of the distal ends 132 passing over or engaging the soil 1 may in some examples be between 1 and 5 times the speed at which the machine 100 is progressed forwards in the direction A. In some examples the speed of the distal ends 132 passing over or engaging the soil 1 may be 1.5, 2, 3 or 4 times the speed at which the machine 100 is progressed forwards in the direction A.

Referring still to Figure 1d, it can be seen that the share 110 comprises a cutting edge 111 which is arranged parallel with the axis of rotation of the rotor 120. This ensures that the tines 130 and cutting edge 111 work together to cut the weeds and tend to align the weeds with the cutting edge 111 for cutting, rather than allow the weeds to be pushed laterally by the share 110 thereby avoiding being cut.

The rotor 120 may be provided with power from the PTO from the tractor or other vehicle pulling the machine 100. In this connection, the rotor 120 is driven directly from the PTO. In some other examples, supporting wheels and a power transmission arrangement may be provided, as will be shown later.

The share 110 is held in a shank 112 which is connected to the tractor or other vehicle, as will be explained in more detail later. The shank 112 is provided with a spring (not shown), such that the shank 112 can move to allow rocks, boulders or other obstructions in the soil to pass over the shank 112 without causing blockage or problems at the shank 112.

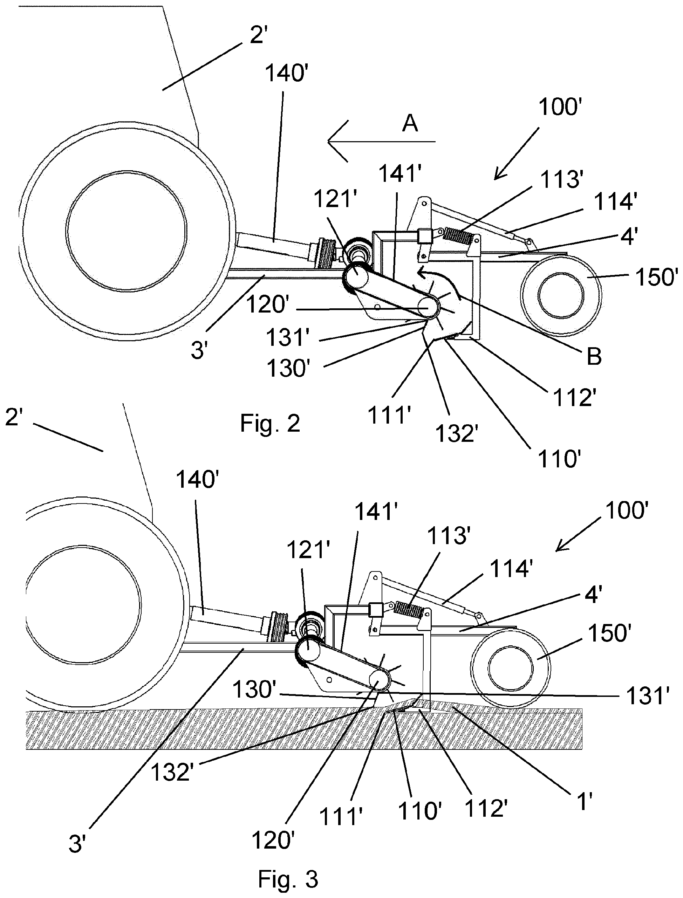

Figure 2 shows an alternative tillage machine 100' being pulled behind a tractor 2'. The tillage machine 100' comprises a main frame 3' for attaching the tillage machine 100' to the tractor 2'. In alternative examples the tillage machine 100' may be connected to a tow hitch or another connection point on a tractor 2' or another vehicle. The tillage machine 100' further comprises a subframe 4' which is arranged in an adjustable manner such that the working depth of the machine 100' can be adjusted, as will be explained in more detail later.

Similar reference numerals with the addition of prime (') indicate similar features to the tillage machine 100 of Figure 1d. Similarly to the tillage machine 100 of Figure 1d, the tillage machine 100' comprises a substantially horizontal share 110' for engagement and agitation of the soil 1'. The share 110' is arranged to cut the top layer of the soil 1' and thereby cut the roots of weeds under the top of the soil 1'. To ensure the share 110' does not become clogged with plant residues, a rotor 120' is provided over the share 110'. The rotor 120' is arranged with tines 130' to break up and agitate the soil and plant residues as they pass over the share 110'. In use, the rotor 120' rotates in the driving direction of the machine 100'. That is to say, in the example shown in Figure 2, the machine 100' moves in the direction A' and the rotor 120' rotates in the direction B'. As in the previously described example, the tines 130' are steel bars each connected to the rotor 120' at a proximal end 131' with a spring (not shown), such that each tine 130' can move with respect to the rotor 120' to allow rocks or other obstructions in the soil pass between share and rotor. Each tine 130' has a distal end 132' which passes over or engages the soil. Preferably, the rotor 120' is arranged to rotate with a speed such that the distal ends 132' engage the soil at a speed equal to, or between 1 and 5 times, the speed at which the machine 100' is progressed forwards in the direction A'. The share 110' comprises a cutting edge 111' which is arranged parallel with the axis of rotation of the rotor 120'.

Still referring to Figure 2, it can be seen that the rotor 120' in this example is provided with power from a PTO 140' from the tractor 2' pulling the machine 100'. In this connection, the rotor 120' is driven from the PTO 140' via a belt 141'. It will be understood that other configurations may be provided to transfer power from a PTO shaft to the rotor 120'. For example, the belt 141' may be replaced by a chain. Other standard components may also be required such as an angular gearbox. In the interest of brevity, standard components required to provide driving of the rotor 120' from the PTO 140' are not described herein. Alternatively to the described PTO 140' arrangement, in some examples the rotor 120' may be driven by connection to a wheel 150' or wheels of the machine 100'. A single wheel 150' or multiple wheels also allows the weight of the machine 100' to be shared between the tractor 2' at the front of the machine 100' and the wheels 150' at the rear of the machine 100'. In a preferred example, there is provided two wheels 150'. Using at least two wheels 150' allows for depth precision to be controlled.

The share 110' is held in a shank 112' which is connected to the tractor 2'. In the presently described example, the share 110' is secured into the shank 112' by a plurality of screws (not shown). The shank 112' is provided with a stone release mechanism 113' connecting the shank 112' to the frame 3', such that the shank 112' can move to allow the machine 100' to pass over large rocks, boulders or other obstructions in the soil without breaking the machine 100'. In the presently described example, the stone release mechanism 113' is in the form of a spring arrangement. The stone release mechanism 113' is configured to allow the shank 113' to move when excessive force is applied to the share 110' for example when the share 110' hits fixed rocks in the soil. In other examples the stone release mechanism 113' may be provided in the form of a hydraulics arrangement, multiple springs, break-bolts or a combination of such components or other mechanical components. Although only one shank 113' is visible in the view shown in Figure 2, it will be understood that a row of shanks 113' and shares 110' is provided. The shanks 113' are arranged in a spaced configuration such that there is a separation between each adjacent shank 113' of between 50cm and 1m. This separation is provided to minimise organic matter build up on the front of the shanks 113', thereby reducing the risk of clogging of the machine 100'.

Still referring to Figure 2, it can be seen that the axis of rotation of the rotor 120' is parallel with the cutting edge 111' of the share 110'. The axis of rotation of the rotor 120' and the cutting edge 111' of the share 110' are both arranged to be perpendicular to the direction A in which the tillage machine 100' travels in use. Furthermore, it can be seen in Figure 2 that the rotor 120' is vertically aligned with the share 110'.

The rotor 120' and tines 130' are configured to mitigate the risk of clogging of the share 110'. In this regard, the rotor 120' and tines 130' are arranged to help organic matter and soil pass over the share 110'. In contrast to previously discussed rotary harrows, the rotor 120' and tines 130' in the presently described examples is not intended to provide intensive crushing or to cut the weeds into smaller pieces. Instead, the rotor 120' and tines 130' are configured to provide low intensity crushing, agitation or manipulation of the soil with limited acceleration of the soil. This provides a tillage machine 100' which has very low energy consumption.

Still referring to Figure 2, it can be seen that the wheels 150' are supported by the subframe 4' which is arranged in an adjustable manner relative to the main frame 3' such that the working depth of the machine 100' can be adjusted. In this connection, the subframe 4' comprises an adjustable connection to the main frame 3'. In the presently described example, the adjustable connection is in the form of a hydraulic cylinder 114'. The hydraulic cylinder 114' can be adjusted to adjust the working depth of the machine 100'. The appropriate configuration of linkages between the adjustable connection and the share 110' such that adjustment of the adjustable connection causes lifting or lowering of the share 110' may be realised in a myriad of ways, which are not described in detail here in the interest of brevity.

In the presently described example, the wheel 150' is located at the rear of the machine 100', behind the shank 112' and the share 110'. In other examples the wheel 150' or wheels 150' may be provided in front of the shank 112' and the share 110'.

Still referring to Figure 2, it can be seen that the rotor 120' is arranged with a gap between the rotor 120' and the main frame 3' and subframe 4'. The rotor 120' is arranged to move vertically if required when the tines 130' pass over larger rocks. As previously explained, the tines 130' are arranged to move such that the rotor 120' and tines 130' can pass over rocks. If larger rocks are encountered, they may become jammed between the share and the rotor 120'. To avoid this, the rotor 120' is arranged to be able to move vertically if a large enough force is applied to the rotor 120' (either directly or via the tines 130') from a trapped rock for example. The configuration of the rotor 120' to move vertically when required may be realised in a myriad of ways. For example, the rotor 120' may be configured to move vertically by means of a vertically disposed spring, such that vertical force applied to the rotor 120' from a rock for example, will cause temporary deformation of the spring. Once the machine 100' has passed the rock, the rotor 120' may return to its normal operating position. The rotor 120' may also be lifted vertically if for example the rotor 120' is passing ridges or hill-tops in a field.

The rotor 120' may be arranged such that the operating height of the rotor 120' can be adjusted. This may be desirable if for example the share 110' is lowered deeper into the soil, and it is desirable to maintain the rotor 120' and tines 130' from penetrating too deeply into the soil by adjusting the operating position of the rotor 120' upwards. It may be desirable to do this such that the energy consumption of the machine 100' is not greatly increased. The rotor 120' may be configured to be adjustable in height in a plurality of different ways. For example, the machine 100' may be provided with multiple slots within which the rotor 120' may be mountable within. In such an arrangement, to adjust the height, the rotor 120' may be removed from its present slot and inserted into a slot at a higher or lower position. In some examples, the rotor 120' may be provided with an electro-mechanical configuration whereby the height of the rotor 120' can be easily adjusted without removing the rotor 120' and replacing it at a different height.

Referring now to Figure 3, the tillage machine 100' shown in Figure 2 is shown in use. It can be seen that the share 110' cuts only at a shallow depth in the soil 1'. Furthermore, it can be seen that the tines 130' are configured not to penetrate the soil 1' deeply, which would increase energy consumption of the machine 100'.

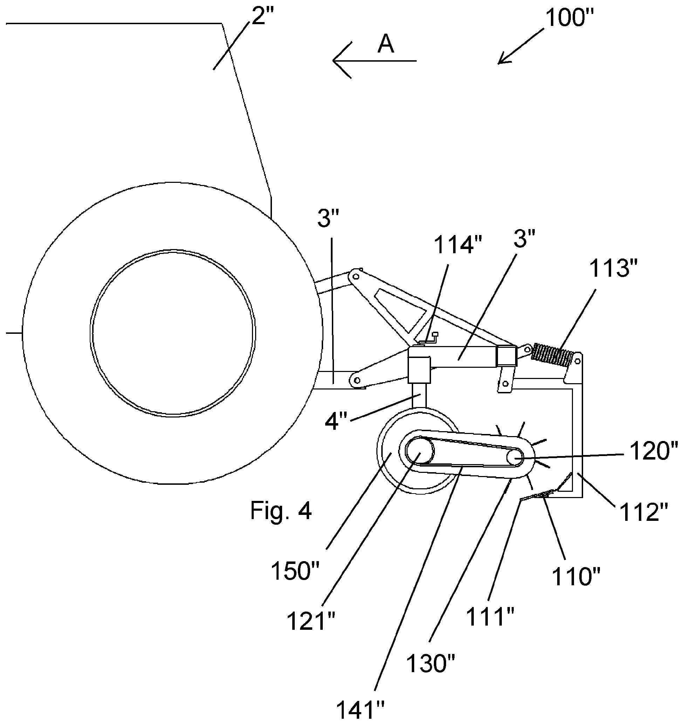

Referring now to Figure 4, where an alternative example of a tillage machine 100" is shown. Similar reference numerals with the addition of prime (") indicate similar features to the tillage machine 100 of Figure 1d and the tillage machine 100' of Figures 2 and 3. The tillage machine 100" comprises a share 110" arranged to cut the top layer of the soil and thereby cut the roots of weeds under the top of the soil. A rotor 120" with tines 130" is provided to break up and guide the soil and plant residues as they pass over the share 110". The rotor 120" again rotates in the driving direction of the machine 100". The tines 130" are steel bars each connected to the rotor 120" at a proximal end 131" with a spring (not shown), such that each tine 130" can move with respect to the rotor 120" to pass over rocks or other obstructions in the soil. The rotor 120" is arranged to rotate with a speed such that the distal ends 132" engage the soil at a speed equal to, or between 1 and 5 times, the speed at which the machine 100" is progressed forwards. The share 110" comprises a cutting edge 111" which is arranged parallel with the axis of rotation of the rotor 120".

The rotor 120" in this example is not provided with power from a PTO from the tractor 2" pulling the machine 100". It can be seen in Figure 4 that the machine 100" is connected to the tractor 2" by a mechanical linkage with no PTO. In this connection, the rotor 120" is driven from the rotation of the wheel 150" via a belt 141". The belt 141" is connected to the driving wheel 150" at a point with a larger diameter than the point the belt is connected to at the rotor 120". The difference in diameter affects the speed of rotation of the rotor 120" relative to the wheel 150". As previously explained, it is desirable to maintain the speed of the rotor 120" such that the distal ends of the tines pass over or contact the soil at between 1 and 5 times the speed that the machine 100" progresses at. It will be understood that the relative diameters may be adjusted to adjust the speed of the rotor 120" relative to the wheel 150".

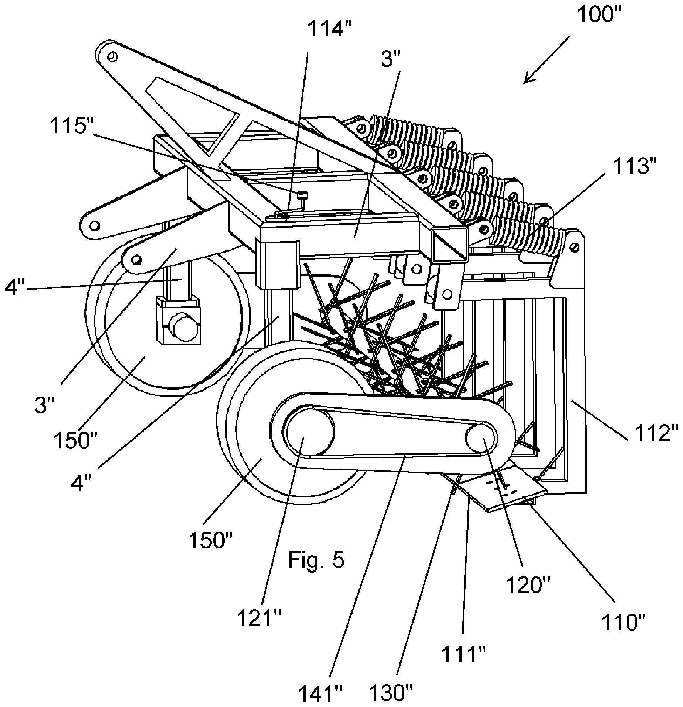

The share 110" is held in a shank 112" which is connected to the tractor 2". As in the previously described examples, the shank 112" is provided with a stone release mechanism 113" connecting the shank 112" to the frame 3", such that the shank 112" can move to allow rocks, boulders or other obstructions in the soil to pass over the shank 112" without causing blockage or problems at the shank 112". Although only one shank 113" is visible in the view shown in Figure 4, it can be seen in an alternative view shown in Figure 5 that there is a plurality of shanks 112" and shares 110" provided across the width of the machine 100". Furthermore, it can be seen in Figures 4 and 5 that the rotor 120" is vertically aligned with the shares 110".

Still referring to Figures 4 and 5, it can be seen that the wheels 150" are supported by subframes 4" which are arranged in an adjustable manner relative to the main frame 3" such that the working depth of the machine 100" can be adjusted. In this connection, the subframes 4" comprise an adjustable connection to the main frame 3". In the presently described example, the adjustable connection is in the form of a manually adjustable telescopic legs which can be adjusted by rotation of a knob 115" located at the top of the telescopic legs. The telescopic legs can be adjusted to adjust the working depth of the machine 100". In the presently described example, the wheels 150" are located at the front of the machine 100", in front of the shanks 112" and the shares 110". In other examples the wheel 150" or wheels 150" may be provided at the rear of the machine 100".

Referring to Figure 5, it can be seen that the rotor 120" is arranged with a gap between the rotor 120" and the main frame 3". The rotor 120" is arranged to move vertically if required when the tines 130" pass over larger rocks. As previously discussed, the configuration of the rotor 120" to move vertically when required may be realised in a myriad of ways. In the presently described example, the rotor 120" is arranged in a hinged configuration with respect to the wheels 150". The hinged configuration also provides a bias such that the rotor 120" is biased towards the soil when in use either by the rotor weight or other means. However, if the rotor 120" encounters a large rock, the upwards force on the rotor 120" may be sufficient to overcome the bias, and the rotor 120" may be allowed to move upwards by means of the hinged connection to the wheels 150". In this way, the rotor 120" can pass over large or problematic rocks by lifting upwards when required. The rotor 120" may also be lifted vertically if for example the rotor 120" is passing ridges or hill-tops in a field.

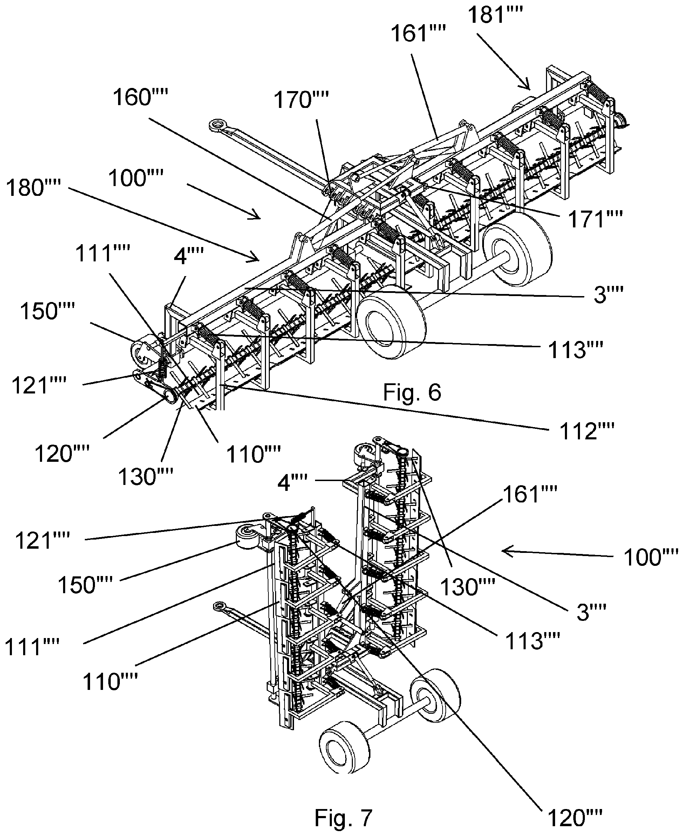

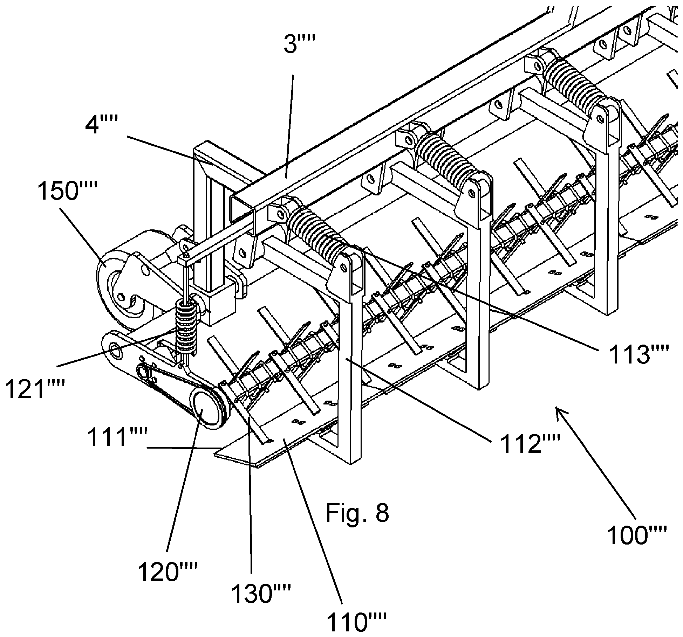

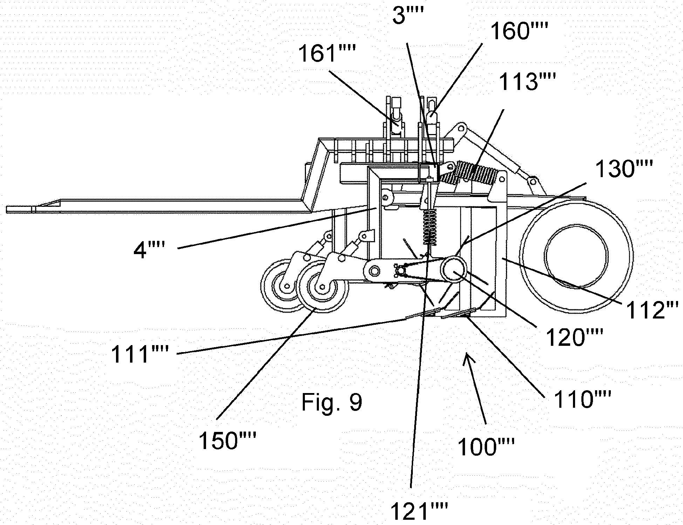

Referring now to Figures 6 to 9, another alternative example of a tillage machine 100ʺʺ is provided. The tillage machine 100ʺʺ is foldable to allow for easy transportation and storage. Similar reference numerals indicate similar features to the previous examples. The tillage machine 100ʺʺ comprises main components of: a main frame 3ʺʺ, a subframe 4ʺʺ, wheels 150ʺʺ, stone release mechanism 113ʺʺ, a rotor 120ʺʺ, tines 130"", shanks 112ʺʺ and shares 110ʺʺ comprising a cutting edge 111ʺʺ.

The rotor 120ʺʺ is arranged with a gap between the rotor 120ʺʺ and the main frame 3ʺʺ. The rotor 120ʺʺ is arranged to move vertically if required when the tines 130ʺʺ pass over larger rocks. The rotor 120ʺʺ is arranged with a spring connection 121ʺʺ such that the rotor 120ʺʺ is biased downwards in normal use. If the rotor 120ʺʺ encounters a large rock, the upwards force on the rotor 120ʺʺ may be sufficient to overcome the downwards bias provided by the spring connection 121ʺʺ, and the rotor 120ʺʺ may be allowed to move upwards. In this way, the rotor 120ʺʺ can pass over large or problematic rocks by lifting upwards when required. The rotor 120ʺʺ may also be lifted vertically if for example the rotor 120" is passing ridges or hill-tops in a field.

Still referring to Figures 6 to 9, although particularly to Figure 6, the machine 100ʺʺ comprises first 160ʺʺ and second 161ʺʺ hydraulic cylinders and first and second hinges 170"", 171"". The first and second hinges 170"", 171ʺʺ are arranged to allow first and second portions 180ʺʺ, 181ʺʺ of the main frame 3ʺʺ to rotate substantially at the mid point of the main frame 3ʺʺ. The first and second hydraulic cylinders 160ʺʺ, 161ʺʺ are configured to allow first and second portions 180ʺʺ, 181ʺʺ of the main frame 3ʺʺ to follow the ground in use and the first and second portions to be supported on the side wheels 150"'. If the first portion 180ʺʺ encounters a raised portion of land (not shown) which is not present under the second portion 181ʺʺ, the first portion 180ʺʺ will be raised by the side wheel 150‴ and the first portion will rotate around the first hinge 170"". Once the first portion 180ʺʺ is brought back onto land which is level with the second portion 181ʺʺ the first hinge 170ʺʺ will allow the first portion 180ʺʺ to rotate back to the original position as the side wheel 150‴ is following the land. Similarly, if the first portion 180ʺʺ encounters a lowered portion of land (not shown) which is not present under the second portion 181ʺʺ, the first portion 180ʺʺ will be lowered by the lowering of the side wheel 150‴ and will rotate around the first hinge 170ʺʺ. Once the first portion 180ʺʺ is brought back onto land which is level with the second portion 181ʺʺ the first hinge 170ʺʺ will allow the first portion 180ʺʺ to rotate back to the original position. In this way, this arrangement allows the machine 100ʺʺ to follow the contours of the land.

Furthermore, as shown in Figure 7, the hydraulic cylinders 160"", 161ʺʺ can be used to fold and lock the first and second portions 180"", 181ʺʺ in a folded position for transport or storage.

In any of the above-mentioned examples the shares 110, 110', 110", 110ʺʺ may comprise simple hardened steel. Typical non-limiting suitable dimensions of the shares 110, 110', 110", 110ʺʺ may be around 6mm by 200mm by 1000mm. It will be understood that these dimensions are exemplary only, and the exact configuration and scale of the machine 100, 100', 100", 100ʺʺ in which the share 110, 110', 110", 110ʺʺ is used will affect the chosen dimensions of the share 110, 110', 110", 110ʺʺ. Additionally, shares 110, 110', 110", 110ʺʺ of other dimensions may be used depending on the soil type, presence of rocks etc. in the specific application in which the tillage machine 100, 100', 100", 100"" will be used. In this connection, in any of the above-mentioned examples, the shanks 112, 112', 112", 112ʺʺ may be configured such that the shares 110, 110', 110", 110ʺʺ are easily removeable and replaceable. This allows the shares 110, 110', 110", 110ʺʺ to be replaced when they are worn or damaged, and also allows the shares 110, 110', 110", 110ʺʺ to be easily replaced with a more appropriate share 110, 110', 110", 110ʺʺ for a particular field or soil type.

Similarly, in any of the above-mentioned examples, the shanks 112, 112', 112", 112ʺʺ may be releasably attached to the main frame 3', 3", 3ʺʺ such that the shanks 112, 112', 112", 112ʺʺ can be easily replaced when they become damaged.

In all of the above-mentioned examples, the shares 110, 110', 110", 110ʺʺ are provided with a downward angle to assist the machine 100, 100', 100", 100ʺʺ in engaging the soil.

In any of the above-mentioned examples, the rotor 120, 120', 120", 120ʺʺ may be arranged to be vertically higher than the cutting edge of the corresponding share 110, 110', 110", 110"" in use. Preferably, the rotor 120, 120', 120", 120"" may be vertically above the cutting edge of the corresponding share 110, 110', 110", 110ʺʺ. Alternatively, the rotor 120, 120', 120", 120ʺʺ may be vertically higher than the cutting edge of the corresponding share 110, 110', 110", 110ʺʺ and within 30cm forward or rearward of the cutting edge of the corresponding share 110, 110', 110", 110ʺʺ.

In some of the above-mentioned examples, the rotor 120, 120', 120", 120ʺʺ is positioned such that the tines 130, 130', 130", 130ʺʺ do not normally contact the soil until there is a potentially problematic build up of soil. In some examples, the tines 130, 130', 130", 130ʺʺ may touch or penetrate the soil a minimal amount. In other examples, the tines 130, 130', 130", 130ʺʺ may at their lowest point in their rotation, be offset from the soil such that there is a gap between the tines 130, 130', 130", 130ʺʺ and the soil. In these examples, the tines 130, 130', 130", 130ʺʺ only come into contact with the soil when the soil or plant material builds up and it is required that such soil or plant material is guided over the shares 110, 110', 110", 110ʺʺ and/or disturbed and/or agitated.

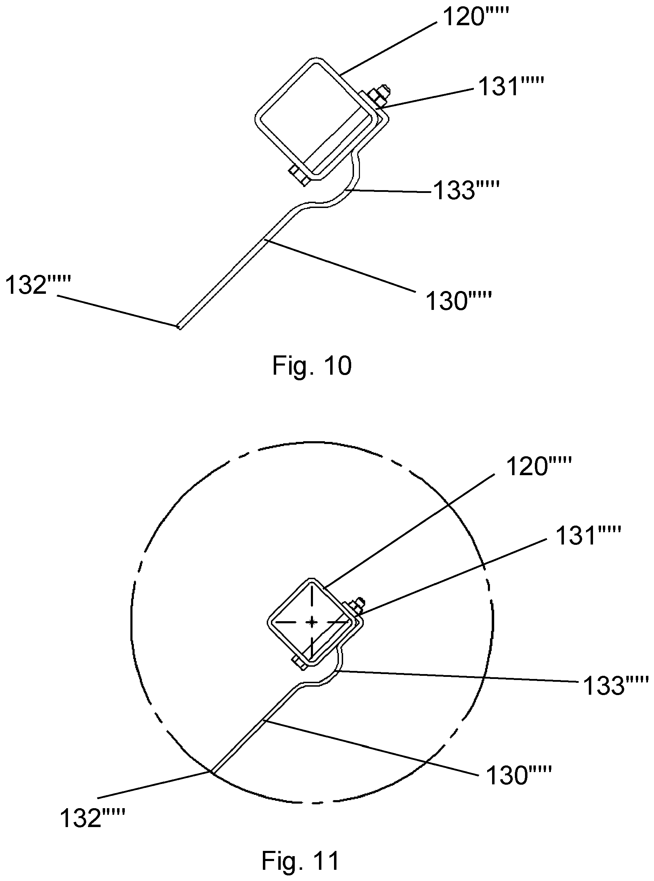

In any of the above-mentioned examples, the tines 130, 130', 130", 130ʺʺ may be replaced by alternative tines 130‴ʺ now described with reference to Figures 10 to 12. As shown in Figure 10, the alternative tine 130‴ʺ may be substantially L-shaped with a proximal end 131‴ʺ and a distal end 132‴ʺ. The proximal end 131‴ʺ being attached to a rotor 120‴ʺ in use. Attachment of the tine 130‴ʺ in the presently described example is by a nut and bolt configuration, however it will be understood that a myriad of suitable attachment means may be used. Still referring to Figure 10, it can be seen that the tine 130‴ʺ comprises a kinked portion 133‴ʺ. The kinked portion 133‴ʺ provides a larger spring property to the tine 130‴ʺ, in that it allows the tine 130‴ʺ to deflect and return to its original position. As previously discussed, the tine 130‴ʺ having a spring property, or alternatively being attached with a spring, allows the tine 130‴ʺ to pass over rocks and obstacles in the soil. Figure 11 shows the path of motion of the distal end 132‴ʺ of the tine 130‴ʺ as the rotor 120‴ʺ rotates the tine 130‴ʺ in use.

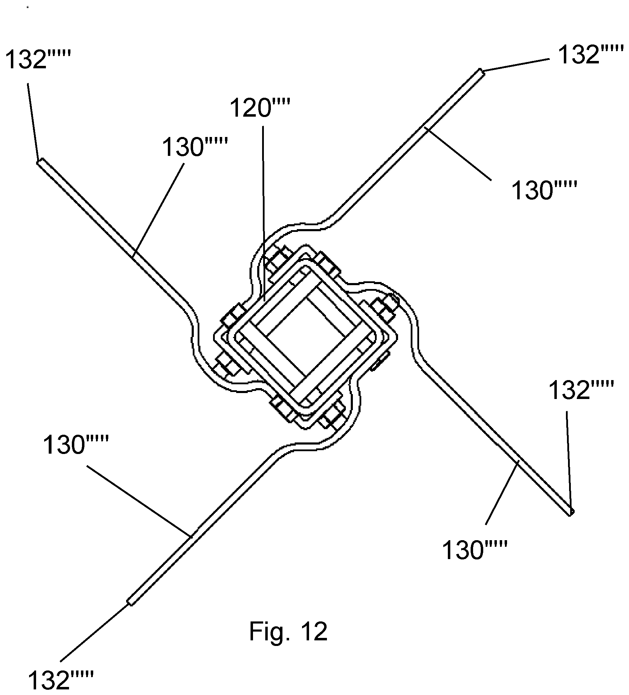

As previously discussed with reference to previous examples, the rotor 120‴ʺ may have a plurality of tines 130‴ʺ attached thereto. In the example shown in Figure 12, the rotor 120‴ʺ has four tines 130‴ʺ over the rotor circumference attached thereto.

It should be noted that the above-mentioned embodiments illustrate rather than limit the invention, and that those skilled in the art will be able to design many alternative embodiments without departing from the scope of the appended claims. In the claims, any reference signs placed between parentheses shall not be construed as limiting the claim. Use of the verb "comprise" and its conjugations does not exclude the presence of elements or steps other than those stated in a claim. The article "a" or "an" preceding an element does not exclude the presence of a plurality of such elements.

The mere fact that certain measures are recited in mutually different dependent claims does not indicate that a combination of these measures cannot be used to advantage.

## Claims

1. A tillage machine (100') for cutting roots of plants or weeds, comprising:
at least one share (110') comprising a cutting edge (111') for cutting roots; and
at least one guiding means comprising a rotor (120') and at least one soil engaging protrusion (130');
wherein the cutting edge (111') is arranged parallel with the axis of rotation of the rotor (120');
the share (110') is configured to be located in soil in use, and
the tillage machine (100') is configured such that the at least one guiding means is located above the at least one share (110') in use, such that in use the guiding means guides soil and plant material over the share (110') such that the share (110') does not become blocked, wherein
the rotor (120') is located vertically above the cutting edge (111'); and the rotor (120') is configured to allow the soil engaging protrusion (130') to rotate and wherein the soil engaging protrusion (130') is configured to rotate in use and engage the soil and plant material and guide the soil and plant material over the share (110') in use.

2. The tillage machine (100') according to claim 1, wherein the tillage machine (100') further comprises a shank (112') configured to hold the share (110') in a substantially horizonal position in use.

3. The tillage machine (100') according to claim 1 or 2, wherein the rotor (120') is an elongate shaft and the at least one soil engaging protrusion (130') is a tine.

4. The tillage machine (100') according to claim 3, wherein the at least one tine (130') has a proximal end (131') and a distal end (132'), and wherein the proximal end (131') is connected to the rotor (120') with a biassing means configured to bias the tine (130') radially outward of the rotor (120').

5. The tillage machine (100') according to claim 4, wherein the biassing means is configured to allow movement of the tine (130') when a sufficient force is applied to the tine (130').

6. The tillage machine (100') according to claim 3, wherein the at least one tine (130') has a proximal end (131') and a distal end (132'), and wherein the proximal end (131') is connected to the rotor (120') and the tine (130') comprises a spring feature configured to allow movement of the distal end (132') when a sufficient force is applied to the distal end (132').

7. The tillage machine according to claim 6, wherein the at least one tine (130') comprises a longitudinal axis, wherein the spring feature is a bend in the longitudinal axis of the at least one tine (130').

8. The tillage machine (100') according to any of claims 3 to 7, wherein the at least one soil engaging protrusion comprises a plurality of soil engaging protrusions.

9. The tillage machine (100') according to claim 8, wherein each of the plurality of soil engaging protrusions is a tine (130') connected to the rotor (120') at a proximal end (131') with a biassing means configured to bias the tine (130') radially outward of the rotor (120') and to allow movement of the tine (130') when a sufficient force is applied to the tine (130').

10. The tillage machine (100') according to any preceding claim, wherein tillage machine (100') further comprises a main frame (3'), an adjustable subframe (4') and at least one wheel (150'), wherein
the main frame (3') is for connecting the tillage machine (100') to a vehicle (2') in use;
the adjustable subframe (4') is connected to the main frame (3') and to the at least one wheel (150'); and
the at least one wheel (150') is configured to travel across the surface of the soil in use and support at least some of the weight of the tillage machine (100') in use; wherein
the adjustable subframe (4') is configured to allow adjustment of the working depth of the at least one share (110') in use by raising or lowering the wheel (150') with respect to the share (110').

11. The tillage machine (100') according to claim 10, wherein the adjustable subframe (4') is configured to raise or lower the wheel (150') with respect to the share (110') by means of an adjustable connection between the main frame (3') and the at least one wheel (150').

12. The tillage machine (100') according to claim 11, wherein the adjustable connection is a hydraulic cylinder (114').

13. The tillage machine (100') according to claim 11, wherein the subframe (4') comprises a telescopic leg and the adjustable connection comprises a manually adjustable knob for telescoping the telescopic leg.

14. A tillage system for cutting plants or weeds, the system comprising:
a tractor; and
a tillage machine (100') according to any of claims 1 to 13;
wherein the tillage machine (100') is connected to the tractor such that the tillage machine (100') can be pulled by the tractor in use to cut plants or weeds in soil.

15. A method of cutting roots of plants or weeds in a strip of soil, the method comprising the steps of:
providing a tillage machine according to any of claims 1 to 13;
locating the share (110') within the soil;
locating the guiding means above the soil surface such that it can guide soil over the share (110') in use; and
advancing the tillage machine (100') through the soil to cut the roots of plants or weeds in the soil.

## Patentansprüche

1. Bodenbearbeitungsmaschine (100') zum Schneiden von Pflanzenwurzeln oder Unkraut, umfassend:
mindestens ein Pflugschar (110') umfasst, der eine Schneidkante (111') zum Schneiden von Wurzeln umfasst; und
mindestens eine Führungseinrichtung, die einen Rotor (120') und mindestens einen Boden-Eingriffsvorsprung (130') umfasst;
wobei die Schneidkante (111') parallel zur Drehachse des Rotors (120') angeordnet ist;
der Pflugschar (110') konfiguriert ist, um in Gebrauch im Boden positioniert zu sein, und
die Bodenbearbeitungsmaschine (100') konfiguriert ist, um die mindestens eine Führungseinrichtung über dem mindestens einen Pflugschar (110') in Gebrauch zu positionieren, so dass die Führungsmittel in Gebrauch Erde und Pflanzenmaterial über die Pflugschar (110') leiten. so dass der Pflugschar (110') nicht blockiert wird, wobei
der Rotor (120') vertikal über der Schneidkante (111') positioniert ist;
und der Rotor (120') konfiguriert ist, um dem Boden-Eingriffsvorsprung (130') zu erlauben sich zu drehen, und wobei die Boden-Eingriffsvorsprung(130') konfiguriert ist, um sich in Gebrauch zu drehen und mit dem Boden und dem Pflanzenmaterial in Eingriff zu kommen und das Boden- und Pflanzenmaterial im Gebrauch über den Pflugschar (110') zu leiten.

2. Bodenbearbeitungsmaschine (100') nach Anspruch 1, wobei die Bodenbearbeitungsmaschine (100') weiter einen Schaft (112') umfasst, der konfiguriert ist, um den Pflugschar (110') in Gebrauch in einer im Wesentlichen horizontalen Position zu halten.

3. Bodenbearbeitungsmaschine (100') nach Anspruch 1 oder 2, wobei der Rotor (120') eine längliche Welle ist und der mindestens eine Boden-Eingriffsvorsprung (130') eine Zinke ist.

4. Bodenbearbeitungsmaschine (100') nach Anspruch 3, wobei die zumindest eine Zinke (130') ein proximales Ende (131') und ein distales Ende (132') hat, und wobei das proximale Ende (131') mit dem Rotor (120') über ein Vorspannmittel verbunden ist, die konfiguriert ist, um die Zinke (130') radial nach außen vom Rotor (120') vorzuspannen.

5. Bodenbearbeitungsmaschine (100') nach Anspruch 4, wobei das Vorspannmittel konfiguriert ist, um eine Bewegung der Zinke (130') zuzulassen, wenn eine ausreichende Kraft auf die Zinke (130') ausgeübt wird.

6. Bodenbearbeitungsmaschine (100') nach Anspruch 3, wobei die mindestens eine Zinke (130') ein proximales Ende (131') und ein distales Ende (132') aufweist, und wobei das proximale Ende (131') mit dem Rotor (120') verbunden ist und die Zinke (130') ein Federelement umfasst, das konfiguriert ist, um eine Bewegung des distalen Endes (132') zu ermöglichen, wenn eine ausreichende Kraft auf das distale Ende (132') ausgeübt wird.

7. Bodenbearbeitungsmaschine nach Anspruch 6, wobei die mindestens eine Zinke (130') eine Längsachse umfasst, wobei das Federelement eine Biegung in der Längsachse der mindestens einen Zinke (130') ist.

8. Bodenbearbeitungsmaschine (100') nach einem der Ansprüche 3 bis 7, wobei der mindestens eine Boden-Eingriffsvorsprung eine Vielzahl von Boden-Eingriffsvorsprüngen umfasst.

9. Bodenbearbeitungsmaschine (100') nach Anspruch 8, wobei jede der mehreren Boden-Eingriffsvorsprünge eine Zinke (130') ist, die an einem proximalen Ende (131') mit dem Rotor (120') verbunden ist, wobei ein Vorspannmittel vorgesehen ist, die die Zinke (130') radial nach außen vom Rotor (120') vorspannt und eine Bewegung der Zinke (130') ermöglicht, wenn eine ausreichende Kraft auf die Zinke (130') ausgeübt wird.

10. Bodenbearbeitungsmaschine (100') nach einem vorstehenden Anspruch, wobei die Bodenbearbeitungsmaschine (100') weiter einen Hauptrahmen (3'), einen verstellbaren Hilfsrahmen (4') und mindestens ein Rad (150') umfasst, wobei
der Hauptrahmen (3') dazu dient, die Bodenbearbeitungsmaschine (100') in Gebrauch mit einem Fahrzeug (2') zu verbinden,
der verstellbare Hilfsrahmen (4') mit dem Hauptrahmen (3') und mit dem mindestens einen Rad (150') verbunden ist; und
das mindestens eine Rad (150') konfiguriert ist, um sich in Gebrauch über die Oberfläche des Bodens zu bewegen und mindestens einen Teil des Gewichts der in Gebrauch befindlichen Bodenbearbeitungsmaschine (100') zu tragen; wobei
der verstellbare Hilfsrahmen (4') konfiguriert ist, um die Einstellung der Arbeitstiefe des mindestens einen in Gebrauch befindlichen Pflugschar (110') durch Anheben oder Absenken des Rades (150') relativ zum Pflugschar (110') zu erlauben.

11. Bodenbearbeitungsmaschine (100') nach Anspruch 10, wobei der verstellbare Hilfsrahmen (4') konfiguriert ist, um das Rad (150') mittels einer verstellbaren Verbindung zwischen dem Hauptrahmen (3') und dem mindestens einen Rad (150') in Bezug auf den Teil (110') anzuheben oder abzusenken.

12. Bodenbearbeitungsmaschine (100') nach Anspruch 11, wobei die einstellbare Verbindung ein Hydraulikzylinder (114') ist.

13. Bodenbearbeitungsmaschine (100') nach Anspruch 11, wobei der Unterrahmen (4') ein Teleskopbein umfasst und die verstellbare Verbindung einen manuell verstellbaren Knopf zum Teleskopieren des Teleskopbeins umfasst.

14. Bodenbearbeitungssystem zum Schneiden von Pflanzen oder Unkraut, wobei das System umfasst:
ein Traktor; und
eine Bodenbearbeitungsmaschine (100') nach einem der Ansprüche 1 bis 13;
wobei die Bodenbearbeitungsmaschine (100') mit dem Traktor verbunden ist, so dass die Bodenbearbeitungsmaschine (100') vom Traktor in Gebrauch gezogen werden kann, um Pflanzen oder Unkraut im Boden zu schneiden.

15. Verfahren zum Schneiden von Wurzeln von Pflanzen oder Unkraut in einem Bodenstreifen, das Verfahren umfassend die folgenden Schritte:
Bereitstellen einer Bodenbearbeitungsmaschine nach einem der Ansprüche 1 bis 13;
Positionieren des Pflugschars (110') im Boden;
Positionieren der Führungsmittel über der Bodenoberfläche so dass es Boden über in Gebrauch befindlichen Pflugschar (110') führen kann; und
Vorwärtsbewegen der Bodenbearbeitungsmaschine (100') durch den Boden zum Schneiden der Wurzeln der
Pflanzen oder Unkraut im Boden.

## Revendications

1. Machine (100') de travail du sol pour couper les racines de plantes ou de mauvaises herbes, comprenant :
au moins un soc (110') comprenant un bord de coupe (111') pour couper des racines ; et
au moins un moyen de guidage comprenant un rotor (120') et au moins une saillie (130') d'engagement avec le sol ;
dans laquelle le bord de coupe (111') est agencé parallèlement à l'axe de rotation du rotor (120') ;
le soc (110') est conçu de façon à être situé dans un sol lors de l'utilisation, et la machine (100') de travail du sol est conçue de sorte que le au moins un moyen de guidage soit situé au-dessus du au moins un soc (110') lors de l'utilisation, de sorte que, lors de l'utilisation, le moyen de guidage guide la terre et la matière végétale sur le soc (110'), de sorte que le soc (110') ne soit pas bloqué, dans laquelle
le rotor (120') est situé verticalement au-dessus du bord de coupe (111') ; et le rotor (120') est conçu pour permettre à la saillie (130') d'engagement avec le sol de tourner, et dans laquelle la saillie (130') d'engagement avec le sol est conçue pour tourner lors de l'utilisation et venir en engagement avec le sol et la matière végétale, et pour guider la terre et la matière végétale sur le soc (110') lors de l'utilisation.

2. Machine (100') de travail du sol selon la revendication 1, dans laquelle la machine (100') de travail du sol comprend en outre une tige (112') conçue pour maintenir le soc (110') dans une position sensiblement horizontale lors de l'utilisation.

3. Machine (100') de travail du sol selon la revendication 1 ou la revendication 2, dans laquelle le rotor (120') est un arbre allongé et la au moins une saillie (130') d'engagement avec le sol est une dent.

4. Machine (100') de travail du sol selon la revendication 3, dans laquelle la au moins une dent (130') présente une extrémité (131') proximale et une extrémité (132') distale, et dans laquelle l'extrémité (131') proximale est reliée au rotor (120') avec un moyen de sollicitation conçu pour solliciter la dent (130') radialement vers l'extérieur du rotor (120').

5. Machine (100') de travail du sol selon la revendication 4, dans laquelle le moyen de sollicitation est conçu pour permettre un mouvement de la dent (130') lorsqu'une force suffisante est appliquée à la dent (130').

6. Machine (100') de travail du sol selon la revendication 3, dans laquelle la au moins une dent (130') présente une extrémité (131') proximale et une extrémité (132') distale, et dans laquelle l'extrémité (131') proximale est reliée au rotor (120') et la dent (130') comprend une caractéristique permettant un effet ressort, conçue pour permettre un mouvement de l'extrémité (132') distale lorsqu'une force suffisante est appliquée à l'extrémité (132') distale.

7. Machine de travail du sol selon la revendication 6, dans laquelle la au moins une dent (130') comprend un axe longitudinal, dans laquelle la caractéristique permettant un effet ressort est une courbure dans l'axe longitudinal de la au moins une dent (130').

8. Machine (100') de travail du sol selon l'une quelconque des revendications 3 à 7, dans laquelle la au moins une saillie d'engagement avec le sol comprend une pluralité de saillies d'engagement avec le sol.

9. Machine (100') de travail du sol selon la revendication 8, dans laquelle chaque saillie de la pluralité de saillies d'engagement avec le sol est une dent (130') reliée au rotor (120') au niveau d'une extrémité (131') proximale avec un moyen de sollicitation conçu pour solliciter la dent (130') radialement vers l'extérieur du rotor (120') et pour permettre un mouvement de la dent (130') lorsqu'une force suffisante est appliquée à la dent (130').

10. Machine (100') de travail du sol selon une quelconque revendication précédente, dans laquelle la machine (100') de travail du sol comprend en outre un châssis principal (3'), un sous-châssis (4') réglable et au moins une roue (150'), dans laquelle
le châssis principal (3') est destiné à relier la machine (100') de travail du sol à un véhicule (2') lors de l'utilisation ;
le sous-châssis (4') réglable est relié au châssis principal (3') et à la au moins une roue (150') ; et
la au moins une roue (150') est conçue pour se déplacer sur la surface du sol lors de l'utilisation et supporter au moins une partie du poids de la machine (100') de travail du sol lors de l'utilisation ; dans laquelle
le sous-châssis (4') réglable est conçu pour permettre le réglage de la profondeur de travail du au moins un soc (110') lors de l'utilisation en levant ou en abaissant la roue (150') par rapport au soc (110').

11. Machine (100') de travail du sol selon la revendication 10, dans laquelle le sous-châssis (4') réglable est conçu pour lever ou abaisser la roue (150') par rapport au soc (110') au moyen d'une liaison réglable entre le châssis principal (3') et la au moins une roue (150').

12. Machine (100') de travail du sol selon la revendication 11, dans laquelle la liaison réglable est un vérin (114') hydraulique.

13. Machine (100') de travail du sol selon la revendication 11, dans laquelle le sous-châssis (4') comprend un pied télescopique et la liaison réglable comprend un bouton réglable manuellement pour mouvoir le pied télescopique de façon télescopique.

14. Système de travail du sol pour couper des plantes ou des mauvaises herbes, le système comprenant :
un tracteur ; et
une machine (100') de travail du sol selon l'une quelconque des revendications 1 à 13 ;
dans lequel la machine (100') de travail du sol est reliée au tracteur de sorte que la machine (100') de travail du sol puisse être tirée par le tracteur lors de l'utilisation pour couper des plantes ou des mauvaises herbes dans le sol.

15. Procédé de coupe de racines de plantes ou de mauvaises herbes dans une bande de sol, le procédé comprenant les étapes suivantes :
fourniture d'une machine de travail du sol selon l'une quelconque des revendications 1 à 13 ;
localisation du soc (110') dans le sol ;
localisation du moyen de guidage au-dessus de la surface du sol de sorte qu'il puisse guider
la terre sur le soc (110') lors de l'utilisation ; et
l'avancement de la machine (100') de travail du sol à travers le sol pour couper les racines de plantes ou de mauvaises herbes dans le sol.
